(19) Europäisches Patentamt
European Patent Office
Office européen des brevets

(11) Numéro de publication : **0 034 969**
**B1**

(12) **FASCICULE DE BREVET EUROPÉEN**

(45) Date de publication du fascicule du brevet :
25.07.84

(21) Numéro de dépôt : **81400219.2**

(22) Date de dépôt : **12.02.81**

(51) Int. Cl.³ : **G 21 D 3/12**

(54) **Procédé de régulation de la puissance fournie par un réacteur nucléaire à eau sous pression à une turbine à vapeur.**

(30) Priorité : **15.02.80 FR 8003433**

(43) Date de publication de la demande :
**02.09.81 Bulletin 81/35**

(45) Mention de la délivrance du brevet :
**25.07.84 Bulletin 84/30**

(84) Etats contractants désignés :
**BE CH DE GB IT LI SE**

(56) Documents cités :
**FR-A- 1 517 590**
**FR-A- 2 083 445**
**FR-A- 2 392 472**
**US-A- 3 930 937**
**US-A- 3 933 580**
**US-A- 4 046 625**
**US-A- 4 055 463**
**US-A- 4 077 836**

(73) Titulaire : **Framatome**
**Tour Fiat 1 place de la Coupole**
**F-92400 Courbevoie (FR)**

(72) Inventeur : **Petetrot, Jean-François**
**148 rue de la Convention**
**F-75015 Paris (FR)**
Inventeur : **Parent, Pierre**
**503 East White Street**
**Champaign, Illinois 61820 (US)**

(74) Mandataire : **Bouget, Lucien et al**
**CREUSOT-LOIRE 15 rue Pasquier**
**F-75383 Paris Cedex 08 (FR)**

## Description

L'invention concerne un procédé de régulation de la puissance fournie par un réacteur nucléaire à eau sous pression à une turbine à vapeur entraînant une génératrice de courant électrique alimentant un réseau.

Dans les centrales nucléaires à eau sous pression utilisées pour la production de courant électrique, on produit de la vapeur par échange de chaleur entre le fluide primaire constitué par de l'eau sous pression et le fluide secondaire constitué par de l'eau qui se transforme en vapeur à l'intérieur des générateurs de vapeur.

La vapeur est utilisée comme fluide moteur de la turbine qui entraîne la génératrice de courant électrique.

La puissance électrique demandée par le réseau peut-être variable au cours du temps, si bien que la puissance que doit fournir le réacteur nucléaire à la turbine peut être elle-même essentiellement variable au cours du temps. D'autre part, il est quelquefois nécessaire de déconnecter la génératrice de courant et le réseau pour un temps plus ou moins long pour une raison indépendante de la conduite de la centrale nucléaire elle-même. Dans ce cas, la puissance demandée par la turbine est extrêmement faible puisqu'il suffit alors de fournir la puissance électrique nécessaire pour l'alimentation des circuits auxiliaires de la centrale, le réseau d'évacuation étant déconnecté. Généralement cette puissance résiduelle ne représente que 5 % environ de la puissance nominale de la centrale.

On sait que la conduite des réacteurs nucléaires pour suivre un programme de puissance donné, utilise des barres de commande absorbant les neutrons qu'on déplace dans le cœur du réacteur en fonction du programme de puissance demandée.

Cependant, dans le cas de variations importantes et rapides de puissance pour répondre à la demande du réseau ou dans le cas d'une déconnection électrique entre la centrale et le réseau, cette opération étant appelée îlotage, il est nécessaire de disposer d'un moyen de régulation complémentaire de la puissance fournie par le réacteur nucléaire à la turbine à vapeur.

Les centrales nucléaires à eau sous pression comportant donc un système de contournement de la vapeur qui permet de créer une charge artificielle susceptible d'absorber la puissance excédentaire du réacteur nucléaire. Cette charge artificielle est obtenue par relâchement de la vapeur prise en amont de la turbine soit à l'atmosphère, soit au condenseur.

Ces systèmes de contournement de vapeur permettent des variations négatives de la charge de la turbine, d'une amplitude supérieure à 10 % de la charge nominale ou encore une variation en fonction du temps de cette charge de la turbine avec une pente négative supérieure à 5 % de la charge nominale par minute.

Lorsque le programme de puissance demande des variations de la charge de moindre amplitude, la compensation se fait uniquement par déplacement des barres de commande.

Les systèmes de contournement permettent également d'absorber la puissance excédentaire lors d'une réduction brutale de puissance depuis la puissance nominale jusqu'à la puissance nécessaire à l'alimentation des circuits auxiliaires, soit approximativement 5 % de la puissance nominale, lors d'un îlotage produisant un délestage du groupe turbo-alternateur sans arrêt d'urgence du réacteur nucléaire.

Dans le cas d'un arrêt d'urgence du réacteur, les systèmes de contournement servent également à éliminer la chaleur et l'énergie emmagasinée dans le circuit primaire et à ramener la centrale aux conditions de charge nulle sans qu'il soit nécessaire d'ouvrir les soupapes de sécurité des générateurs de vapeur.

Les systèmes de contournement sont constitués par des ensembles de vannes disposées sur le circuit secondaire du réacteur en amont de l'admission de la vapeur à la turbine. Ces vannes sont commandées électriquement grâce à un signal d'ouverture élaboré à partir de signaux de mesure représentant les valeurs de certains paramètres représentatifs de l'état de charge de la turbine ou du réacteur.

Les paramètres utilisés peuvent être homogènes à des températures ou à des pressions et suivant le cas on parlera de régulation en mode température ou en mode pression.

Un procédé classique de régulation en mode température utilise une mesure de pression sur la première roue de la turbine et élabore à partir du signal représentatif de cette mesure, un signal représentatif d'une température appelée température de référence. Cette température de référence est utilisée pour la régulation des déplacements des barres de commande et sert également de température de référence pour la commande du contournement.

On mesure d'autre part la température moyenne dans le circuit primaire du réacteur et on détermine par différence entre la température de référence de contournement et la température moyenne du circuit primaire compensée par un filtre avance-retard, un signal d'erreur qui est converti par un générateur de fonction en un signal d'ouverture du contournement.

Lorsqu'on réalise un îlotage de la centrale, la puissance du réacteur doit être ramenée depuis la puissance nominale jusqu'à une puissance très faible juste nécessaire pour maintenir l'alimentation des circuits auxiliaires.

Cette puissance est de l'ordre de 5 % de la puissance nominale dans la plupart des cas.

On contrôle alors le réacteur, grâce aux barres de commande pour fournir cette puissance à la turbine, les vannes de contournement étant fermées puisque la température de référence du contournement est identique à la température de référence pour la conduite du réacteur.

Pour une puissance aussi faible demandée au réacteur la régulation automatique de puissance ne peut être mise en service et l'opérateur doit reprendre le contrôle du réacteur de façon manuelle, dès que la puissance est inférieure à un certain seuil.

D'autre part, lorsqu'on réalise de nouveau la connection avec le réseau, la puissance du réacteur doit augmenter de la même façon que la puissance fournie à ce réseau lors de la montée en puissance.

On connaît également un dispositif et un procédé (US-A-4 055 463) permettant d'inhiber un moyen de déplacement automatique des barres de commande d'un réacteur nucléaire dans le cas où la charge de la turbine diminue pour atteindre une valeur inférieure à un certain seuil. On évite ainsi de réduire la puissance du réacteur de façon intempestive, en particulier dans le cas où la diminution de la charge n'est que temporaire.

Un ensemble de vannes de contournement commandé par un dispositif de régulation recevant les indications de capteurs de pression et de débit du fluide secondaire permet d'éviter une mise en surpression du circuit primaire et du circuit secondaire, lorsque la charge de la turbine est réduite sans que la puissance du réacteur soit réduite corrélativement. Le signal de débit du fluide secondaire est traité par un filtre à retard. Si la réduction de charge de la turbine se prolonge, il est possible d'agir manuellement sur le dispositif de commande pour baisser la puissance du réacteur jusqu'à la valeur désirée.

Un tel procédé et un tel dispositif ne permettent pas de piloter le réacteur nucléaire de façon totalement automatique, lors d'un îlotage. La puissance du réacteur est maintenue à un niveau qui peut être élevé par blocage du dispositif de déplacement des barres de commande, si bien que le réacteur ne peut être amené à un niveau de puissance convenable pour l'îlotage que par une action manuelle.

Le but de l'invention est donc de proposer un procédé de régulation de la puissance fournie par un réacteur nucléaire à eau sous pression à une turbine à vapeur entraînant une génératrice de courant électrique alimentant un réseau, dans le cas d'un désaccouplement électrique entre la génératrice et le réseau, appelé îlotage, par des déplacements de barres de commande absorbant les neutrons dans le cœur du réacteur et par contournement d'une fraction de la vapeur produite par le réacteur en dehors du circuit de la turbine par ouverture de vannes de contournement, le déplacement des barres de commande étant déterminé en fonction d'un paramètre appelé température de référence, lui-même fonction de la valeur mesurée, instantanée de la charge de la turbine et l'ouverture des vannes de contournement étant déterminée par la valeur de l'écart entre la température de référence et la valeur mesurée, instantanée de la température moyenne dans le circuit primaire du réacteur nucléaire où se trouve l'eau sous pression, ce procédé de régulation devant permettre de maintenir une régulation automatique de la puissance du réacteur et un fonctionnement stable du système de contournement de vapeur pendant tout l'îlotage, et de réaliser des montées en puissance de la turbine plus rapides après îlotage.

Dans ce but :

— on détecte l'apparition d'un îlotage éventuel en surveillant l'apparition d'une diminution très rapide et de grande amplitude de la charge de la turbine, caractérisant cet îlotage,

— dans le cas où un îlotage est détecté :

on compare la température de référence TREC à une valeur limite prédéterminée TR,

on détermine la position des barres de commande grâce à la valeur instantanée de la température de référence TREC tant que celle-ci reste supérieure à la valeur limite TR puis grâce à la valeur limite TR quand la température de référence TREC devient inférieure à la valeur limite TR, la puissance du réacteur étant alors amenée et maintenue à une valeur prédéterminée de façon automatique,

on élabore un signal d'ouverture des vannes de contournement à partir d'un signal représentatif de l'écart TERR entre la température de référence et la température moyenne du circuit primaire et d'un signal de gain fonction de la puissance mesurée instantanée du réacteur nucléaire, pour atténuer l'effet de variation de température sur l'ouverture du contournement, lorsque le réacteur nucléaire a un niveau de puissance faible.

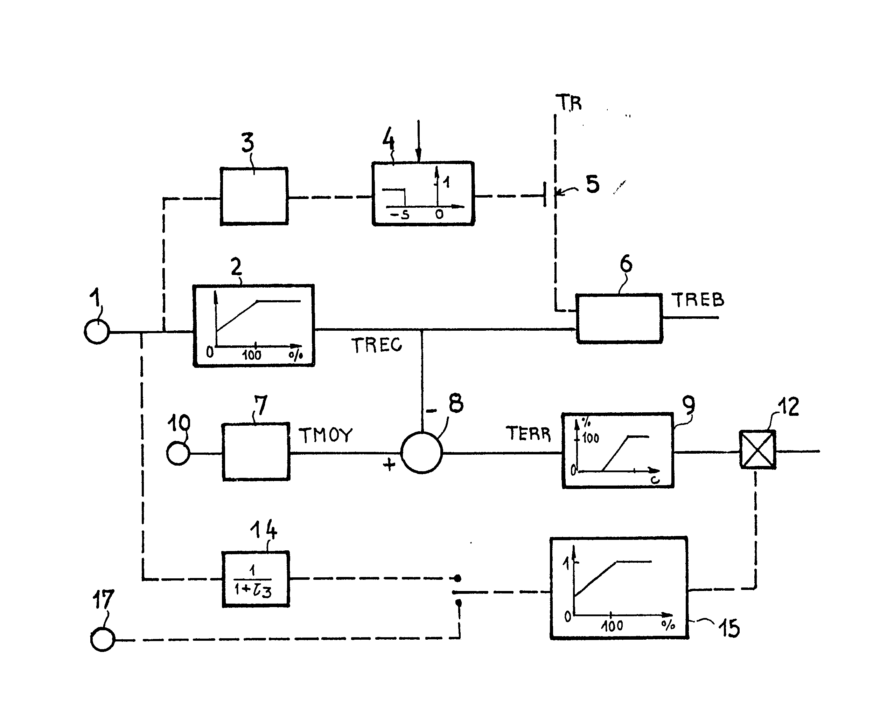

Afin de bien faire comprendre l'invention on va maintenant décrire à titre d'exemple non limitatif, en se référant à la figure jointe en annexe, un mode de réalisation du procédé de régulation suivant l'invention mis en œuvre dans une centrale nucléaire comportant un réacteur à eau sous pression.

Sur la figure unique on voit de façon schématique les divers organes nécessaires pour la régulation de la puissance fournie par le réacteur à la turbine.

Un dispositif de prise de pression 1 sur la première roue de la turbine fournit un signal proportionnel à cette pression à un générateur de fonction 2 qui élabore à partir de ce signal, un signal proportionnel à la température de référence du contournement (TREC).

A titre d'exemple on a montré un générateur de fonction qui fournit un signal proportionnel à la charge de la turbine mesurée par la pression sur la première roue, pour des valeurs correspondant à une charge entre 0 et 100 %.

En amont du générateur de fonction 2, le signal représentatif de la pression sur la première roue de la turbine est envoyé dans un filtre dérivateur 3 dont la fonction est de détecter l'îlotage qui se traduit par une variation très rapide et de grande amplitude de la charge de la turbine. Lorsque le filtre 3 détecte un îlotage, un signal est envoyé sur le relais stable 4 qui actionne alors un contact 5.

La temporisation du filtre 3 est optimisée de façon à éviter l'enclenchement du relais 4 pour des défauts de courte durée qui ne correspondent pas réellement à un îlotage.

D'autre part le relais 4 comporte un seuil S qui permet de ne prendre en compte que les îlotages déclenchés à partir d'un certain niveau de puissance.

La fermeture du contact 5 permet d'envoyer un signal représentatif d'une température de consigne TR sur la première voie d'un sélecteur de maximum 6.

La seconde voie de ce sélecteur de maximum 6 reçoit le signal représentatif de la température de référence TREC.

Lorsqu'un îlotage est détecté, le sélecteur de maximum 6 permet de choisir la valeur maximum entre la température TR et la température TREC cette valeur maximum servant de température de référence pour la conduite du réacteur avec les barres de commande. C'est cette température TREB qui est utilisée pour la conduite automatique du réacteur.

Dans le cas où le contact 5 est ouvert, la température de référence TREB est identique à la température de référence TREC, comme dans le cas de l'art antérieur.

Des capteurs de température 10 permettent une mesure de la température moyenne du circuit primaire du réacteur et le signal représentatif de cette température moyenne est reçu par un filtre avance-retard 7 qui permet l'émission du signal T MOY qui est envoyé sur un soustracteur 8 qui permet d'effectuer la soustraction des signaux correspondants à la température moyenne du circuit primaire et à la température de référence. On élabore ainsi un signal d'erreur T ERR égal à T MOY moins TREC. Ce signal d'erreur TERR est envoyé sur un générateur de fonction 9 qui élabore un signal proportionnel au signal d'erreur qui constitue le signal d'ouverture du contournement.

Le signal représentatif de la pression sur la première roue de turbine est d'autre part dérivé en amont du générateur 2 vers un filtre 14 ayant une constante de temps τ. A la sortie de ce filtre 14, le signal est traité par un générateur de fonction 15 qui élabore un signal de réduction du gain qui est envoyé sur un multiplieur 12 qui élabore à partir du signal d'ouverture du contournement et du gain un signal modifié qui est utilisé pour la commande de l'ouverture des vannes de contournement.

Lorsque la charge de la turbine varie de 0 à 100 %, on pourra par exemple faire varier linéairement le gain entre 0,5 et 1, grâce au générateur de fonction 15 représenté sur la figure.

On a choisi TR, température de consigne en cas d'îlotage, de façon que la puissance du réacteur soit réglée à une valeur de l'ordre de 30 % de la puissance nominale, ce qui permet d'effectuer la régulation de puissance de façon automatique. Cependant, l'action des barres provoque alors des variations de la température moyenne dans le circuit primaire, à l'intérieur de la bande permise pour ces variations, ce qui provoquerait des variations importantes du débit du contournement si le gain conservait la valeur fixe assurant la pleine ouverture du contournement, en début d'îlotage, à partir de la charge nominale. L'élaboration d'un signal de gain variable, en fonction de la charge permet d'éviter cet inconvénient tout en maintenant un gain important permettant la pleine ouverture du contournement en début d'îlotage effectué à partir de la charge nominale.

La constante de temps τ du filtre 14 doit être importante pour éviter une réduction rapide du gain en début d'îlotage mais elle doit cependant permettre au gain de suivre les variations de la charge (par exemple 5 % par minute).

Une valeur permettant de concilier ces exigences contradictoires, a été choisie dans le cas de l'exemple de réalisation, cette valeur est τ = 200 s.

On voit que les principaux avantages du procédé suivant l'invention sont de permettre de maintenir une régulation automatique de la puissance de réacteur en cas d'îlotage de la centrale et d'utiliser le contournement de vapeur pendant l'îlotage avec de bonnes conditions de stabilité.

D'autre part, lorsqu'on effectue à nouveau la connection de la centrale au réseau, la puissance fournie au réseau peut augmenter plus rapidement, puisqu'en refermant les vannes du contournement vapeur, on ajoute à la montée en puissance du réacteur nucléaire, la montée en puissance venant du recyclage de la vapeur dans le circuit de la turbine.

Mais l'invention ne se limite pas au mode de réalisation qui vient d'être décrit.

C'est ainsi qu'on a décrit un mode de réalisation où le gain du signal de contournement était variable linéairement entre 0,5 et 1, lorsque la charge passait de 0 à 100 % mais qu'il est également possible d'imaginer d'autres variations de ce gain, en fonction de la charge. Par exemple, il est possible de limiter les variations linéaires du gain entre 0 et un certain seuil de puissance au-delà duquel le gain est maintenu constant.

D'autre part, le signal de gain était élaboré à partir d'une mesure de la pression sur la première roue de la turbine déterminant la charge de cette turbine, mais il est également possible d'élaborer le signal de gain à partir d'une mesure de flux neutronique réalisé dans le réacteur avec des capteurs 17.

L'invention s'applique aux centrales nucléaires à réacteur à eau sous pression quelles que soient par ailleurs leurs caractéristiques et leur mode de conduite.

**Revendications**

1. Procédé de régulation de la puissance fournie par un réacteur nucléaire à eau sous pression à une turbine à vapeur entraînant une génératrice de courant électrique alimentant un réseau, dans le cas d'un désaccouplement électrique entre la génératrice et le réseau, appelé îlotage, par des déplacements de barres de commande absorbant les neutrons dans le cœur du réacteur et par contournement d'une fraction de la vapeur produite par le réacteur en dehors du circuit de la turbine par ouverture de vannes de contournement, le déplacement des barres de commande étant déterminé en fonction d'un paramètre, appelé température de référence, lui-même fonction de la valeur mesurée, instantanée de la charge de la turbine et l'ouverture des vannes de contournement étant déterminée par la valeur de l'écart entre la température de référence et la valeur mesurée, instantanée de la température moyenne dans le circuit primaire du réacteur nucléaire où se trouve l'eau sous pression, caractérisé par le fait :

— qu'on détecte l'apparition d'un îlotage éventuel en surveillant l'apparition d'une diminution très rapide et de grande amplitude de la charge de la turbine caractérisant cet îlotage,

— que, dans le cas où un îlotage est détecté :

on compare la température de référence (TREC) à une valeur limite prédéterminée (TR),

on détermine la position des barres de commande grâce à la valeur instantanée de la température de référence (TREC) tant que celle-ci reste supérieure à la valeur limite (TR) puis grâce à la valeur limite (TR) quand la température de référence (TREC) devient inférieure à la valeur limite (TR), la puissance du réacteur étant alors amenée et maintenue à une valeur prédéterminée définie par la valeur limite de température (TR) de façon automatique,

on élabore un signal d'ouverture des vannes de contournement à partir d'un signal représentatif de l'écart (TERR) entre la température de référence et la température moyenne du circuit primaire et d'un signal de gain fonction de la puissance mesurée instantanée du réacteur nucléaire, pour atténuer l'effet de variation de température sur l'ouverture du contournement, lorsque le réacteur nucléaire a un niveau de puissance faible.

2. Procédé de régulation suivant la revendication 1, caractérisé par le fait que la température de référence est déterminée à partir d'un signal représentatif de la pression sur la première roue de la turbine.

3. Procédé de régulation suivant l'une quelconque des revendications 1 et 2, caractérisé par le fait que le signal de gain modifiant le signal d'ouverture des vannes de contournement est élaboré à partir d'un signal représentatif de la pression sur la première roue de la turbine.

4. Procédé de régulation suivant la revendication 3, caractérisé par le fait que le signal représentatif de la pression sur la première roue de la turbine est modifié par un filtre à retard pour éviter une modification rapide du gain en début d'îlotage.

5. Procédé de régulation suivant l'une quelconque des revendications 1 à 4, caractérisé par le fait que le signal de gain modifiant le signal d'ouverture des vannes de contournement est élaboré à partir d'un signal représentatif d'une mesure de flux neutronique dans le réacteur nucléaire.

## Claims

1. A process for controlling the power supplied by a pressurised water nuclear reactor to a steam turbine driving an electric current generator feeding a grid, in the event of an electric disconnection between the generator and the grid, called grid separation, by movements of control rods absorbing the neutrons in the reactor core and by bypassing outside the turbine circuit a proportion of the steam produced by the reactor by opening bypass valves, the movement of the control rods being determined as a function of a parameter, called reference temperature, itself a function of the measured momentary value of the turbine load and the opening of the bypass valves being determined by the value of the difference between the reference temperature and the measured momentary value of the average temperature in the primary circuit of the nuclear reactor containing the pressurised water, characterised by the fact :

— that the appearance of a possible grid separation is detected by monitoring the appearance of a very fast, high amplitude decrease in the turbine power, characteristic of this grid separation,

— that in the event that a grid separation is detected :

the reference temperature (TREC) is compared to a predetermined limit value (TR),

the position of the control rods in determined by virtue of the momentary value of the reference temperature (TREC) so long as the latter remains higher than the limit value (TR), then by virtue of the limit value (TR) when the reference temperature (TREC) becomes lower than the limit value (TR), the reactor power being then automatically brought to, and maintained at, a predetermined value defined by the temperature limit value (TR),

a signal for opening the bypass valves is developed from a signal (TERR) representing the difference between the reference temperature and the average temperature of the primary circuit and a gain signal which is a function of the measured momentary power of the nuclear reactor, to attenuate the effect of the temperature change on the opening of the bypass, when the nuclear reactor is at a low power level.

2. A control process according to Claim 1, characterised in that the reference temperature is determined from a signal representing the pressure on the first wheel of the turbine.

3. A control process according to either of Claims 1 and 2, characterised in that the gain signal modifying the signal for opening the bypass valves is developed from a signal representing the pressure on the first wheel of the turbine.

4. A control process according to Claim 3, characterised in that the signal representing the pressure on the first wheel of the turbine is modified by a delay filter to avoid a rapid alteration in the gain at the beginning of grid separation.

5. A control process according to any one of Claims 1 to 4, characterised in that the gain signal modifying the signal for opening the bypass valves is developed from a signal representing a measurement of neutron flux in the nuclear reactor.

## Ansprüche

1. Verfahren zur Regelung der Leistungsabgabe eines Druckwasserkernreaktors an eine Dampfturbine, die einen Stromerzeuger zur Versorgung eines Stromnetzes antreibt, bei einer als Inselbetrieb bezeichneten elektrischen Trennung zwischen dem Stromerzeugen und dem Netz, durch Verschieben in dem Reaktorkern der Neutronenabsorbersteuerstangen und Umlenken eines Teils des von dem Reaktor erzeugten Dampfes aus dem Turbinenkreis durch Öffnen der Bypaßschieber, wobei die Verschiebung der Steuerstangen entsprechend einer als Bezugstemperatur bezeichneten Größe bestimmt wird, die ihrerseits von dem momentanen Meßwert der Turbinenlast abhängig ist, und das Öffnen der Bypaßschieber durch die Differenzgröße zwischen der Bezugstemperatur und der momentanen Meßgröße der Durchschnittstemperatur in dem das Druckwasser führenden Kernreaktorprimärkreis bestimmt wird, dadurch gekennzeichnet, daß ein evtl. auftretender Inselbetrieb durch Überwachung eines sichtbaren, für diesen Inselbetrieb typischen sehr schnellen und umfangreichen Lastabfalls der Turbine festgestellt wird, daß bei einem festgestellten Inselbetrieb :

die Bezugstemperatur (TREC) mit einem voreingestellten Grenzwert (TR) verglichen wird,

die Stellung der Steuerstangen durch die Momentangröße der Bezugstemperatur (TREC), so lange diese über dem Grenzwert (TR) liegen bleibt, dann durch den Grenzwert (TR), wenn die Bezugstemperatur (TREC) unter den Grenzwert (TR) fällt, bestimmt wird, wobei die Reaktorleistung bis zu einer voreingestellten, durch den Temperaturgrenzwert (TR) automatisch bestimmten Größe gesteuert und gehalten wird,

aus einem für die Differenz (TERR) zwischen der Bezugstemperatur und der Primärkreis-Durchschnittstemperatur typischen Signal und aus einem Signal für den Leistungsgewinn in Abhängigkeit der momentan gemessenen Reaktorleistung, ein Signal zum Öffnen der Bypaßschieber gebildet wird um die Wirkung der Temperaturschwankung auf die Öffnung der Bypaßschieber bei einer niedrigen Leistungsabgabe des Kernreaktors zu dämpfen.

2. Regelungsverfahren nach Anspruch 1, dadurch gekennzeichnet, daß die Bezugstemperatur aus einem für den Druck auf dem ersten Turbinenrad typischen Signal bestimmt wird.

3. Regelungsverfahren nach einem der Ansprüche 1 und 2, dadurch gekennzeichnet, daß das Signal für den Leistungsgewinn, welches das Signal zum Öffnen der Bypaßschieber ändert, aus einem für den Druck auf dem ersten Turbinenrad typischen Signal gebildet wird.

4. Regelungsverfahren nach Anspruch 3, dadurch gekennzeichnet, daß das für den Druck auf dem ersten Turbinenrad typische Signal durch einen Verzögerungsfilter geändert wird um eine schnelle Leistungsänderung bei Beginn des Inselbetriebes zu verhindern.

5. Regelungsverfahren nach einem der Ansprüche 1 bis 4, dadurch gekennzeichnet, daß das Leistungssignal, welches das Signal zum Öffnen der Bypaßschieber ändert, aus einem für einen Neutronenflußmeßwert in dem Kernreaktor typischen Signal gebildet wird.